# FASCICULE DE BREVET EUROPEEN

(11) **EP 2 713 982 B1**
(45) Date de publication et mention de la délivrance du brevet: **08.07.2015**
(21) Numéro de dépôt: 12731057.1
(22) Date de dépôt: 24.05.2012
(51) Int. Cl.: A61H 3/04, A61G 5/04

(54) **VEHICULE A AU MOINS TROIS POINTS D'APPUI STABLE SUR LE SOL**
FAHRZEUG MIT MINDESTENS DREI STABILEN LAGERPUNKTEN AUF DEM BODEN
VEHICLE WITH AT LEAST THREE STABLE BEARING POINTS ON THE GROUND

(30) Priorité: 30.05.2011 FR 1154720
(43) Date de publication de la demande: 09.04.2014
(73) Titulaire: Commissariat à l'Énergie Atomique et aux Énergies Alternatives, 75015 Paris (FR)
(72) Inventeur: MENARD, Olivier, F-38000 Grenoble (FR); AN, Sae Kyoung, 10439 Berlin (DE); COLLEAUX, Jérôme, F-78610 Le Perray en Yvelines (FR)
(74) Mandataire: Bonnet, Michel
(86) Numéro de dépôt international: PCT/FR2012/051169
(87) Numéro de publication internationale: WO 2012/164208

(56) Documents cités:
- EP-A1- 0 576 724
- WO-A1-2005/025972
- WO-A1-2008/011705

## Description

La présente invention concerne un véhicule à au moins trois points d'appui stable sur le sol. Notamment, une application visée de cette invention est la conception d'un véhicule, de préférence léger et peu encombrant, d'aide au déplacement d'une personne à mobilité réduite, par exemple une personne âgée.

L'invention s'applique ainsi plus particulièrement à un véhicule à au moins trois points d'appui stable sur le sol, dont au moins un à l'avant et au moins un à l'arrière du véhicule, comportant un bras fixé à l'avant du véhicule, à une première extrémité libre duquel sont montés des moyens de guidage, et un siège situé à l'arrière du véhicule.

Un tel véhicule est connu sous différentes versions. Il peut en particulier être motorisé, entraîné par la force musculaire de la personne qui l'utilise ou à la fois motorisé et entraînable par la force musculaire. Il comporte en général trois roues, l'une à l'avant et les deux autres à l'arrière ou deux à l'avant et la dernière à l'arrière. Comme cela est bien connu, trois points d'appui à l'aide de ces roues sont nécessaires pour assurer une stabilité du véhicule. Lors de son utilisation en situation de déplacement, une personne s'assoit sur le siège et guide le déplacement du véhicule à l'aide des moyens de guidage.

Il est effectivement possible de concevoir de tels véhicules légers et relativement peu encombrants. On peut ainsi citer celui décrit dans le brevet publié sous le numéro US 6,161,860. Mais en fait ce genre de véhicule n'est pas très adapté pour les déplacements courants d'une personne éprouvant des difficultés à se déplacer, telle qu'une personne âgée ou à mobilité réduite. En particulier, il ne permet que des déplacements extérieurs et doit être stationné si la personne souhaite entrer à l'intérieur d'un magasin ou autre bâtiment parce qu'il est malgré tout trop encombrant. Or une personne à mobilité réduite éprouve des difficultés à se déplacer et trouver son équilibre, non seulement pour ses déplacements extérieurs, mais également à l'intérieur de bâtiments, par exemple dans des magasins pour faire ses achats.

Les demandes de brevets publiées sous les numéros EP 0 576 724 A1 et WO 2005/025972 A1 décrivent des véhicules du type précité dans lesquels le bras est déplaçable relativement au siège entre :
- une première position éloignée, relative à un mode autoporteur, dans laquelle une première distance est prévue entre les moyens de guidage et le siège pour recevoir une personne en position assise ou semi-assise sur le siège, et
- une seconde position rapprochée, relative à un mode d'assistance à la marche, dans laquelle une seconde distance inférieure à la première est prévue entre les moyens de guidage et le siège, les moyens de guidage formant dans cette seconde position un moyen d'appui pour une personne marchant derrière le véhicule.

Ces véhicules présentent malgré tout un certain encombrement, même en seconde position rapprochée du bras.

Il peut ainsi être souhaité de prévoir un véhicule à au moins trois points d'appui stable sur le sol qui permette de s'affranchir d'au moins une partie des problèmes et contraintes précités, en particulier la difficulté d'adapter ce type de véhicule à des changements fréquents de types de déplacements, notamment les changements extérieur/intérieur.

Il est donc proposé un véhicule revendiqué à au moins trois points d'appui stable sur le sol, dont au moins un à l'avant et au moins un à l'arrière du véhicule, comportant un bras fixé à l'avant du véhicule, à une première extrémité libre duquel sont montés des moyens de guidage, et un siège situé à l'arrière du véhicule, dans lequel le bras est déplaçable relativement au siège entre :
- une première position éloignée, relative à un mode autoporteur, dans laquelle une première distance est prévue entre les moyens de guidage et le siège pour recevoir une personne en position assise ou semi-assise sur le siège, et
- une seconde position rapprochée, relative à un mode d'assistance à la marche, dans laquelle une seconde distance inférieure à la première est prévue entre les moyens de guidage et le siège, les moyens de guidage formant dans cette seconde position un moyen d'appui pour une personne marchant derrière le véhicule.

Ainsi, un tel véhicule est utilisable par la personne à la fois en tant qu'autoporteur pour les déplacements extérieurs et en tant qu'assistant de marche, par exemple tel un déambulateur ou équivalent, pour des déplacements extérieurs ou intérieurs. Notamment, dans le mode d'assistance à la marche, le bras porteur des moyens de guidage étant rapproché du siège, il présente un encombrement réduit propre à une utilisation intérieure, dans des magasins ou autres bâtiments. En outre le passage de la première à la seconde position est simple puisqu'il porte a priori uniquement sur le déplacement du bras porteur des moyens de guidage.

De façon avantageuse, le véhicule comporte des moyens pour modifier la distance entre les points d'appui avant, d'une part, et arrière, d'autre part, lorsque le bras passe de l'une à l'autre desdites première position éloignée et seconde position rapprochée.

Ainsi, l'équilibre propre du véhicule ainsi que son encombrement deviennent réglables en fonction du mode d'utilisation du véhicule.

De façon optionnelle, les moyens pour modifier la distance entre les points d'appui avant et arrière sont conçus pour rapprocher les points d'appui avant, d'une part, et arrière, d'autre part, lorsque le bras passe de la première position éloignée à la seconde position rapprochée.

Ainsi, la marche de la personne derrière le véhicule est facilitée en mode d'assistance à la marche.

De façon optionnelle également, le siège est monté sur un cadre, le bras des moyens de guidage et le cadre du siège présentant des formes complémentaires de sorte que le bras des moyens de guidage repose contre le cadre du siège dans le mode d'assistance à la marche.

De façon optionnelle également, le siège est monté pivotant sur le cadre autour d'un axe transversal, entre une première position de support en mode autoporteur dans laquelle son plan principal de support est essentiellement parallèle au plan des points d'appui stable et une seconde position escamotée en mode d'assistance à la marche dans laquelle il est rabattu à l'arrière du cadre.

De façon optionnelle également, un véhicule selon l'invention peut en outre comporter, à l'avant du véhicule, un plancher d'appui des pieds d'une personne en position assise ou semi-assise dans le mode autoporteur, ce plancher étant solidaire du cadre sur lequel est monté le siège, le bras des moyens de guidage étant fixé libre en rotation autour d'un axe transversal situé à l'avant du véhicule.

De façon optionnelle également, un véhicule selon l'invention peut en outre comporter des premiers moyens de fixation d'un récipient, disposés à l'arrière du véhicule et prévus pour recevoir un tel récipient en mode autoporteur, et des seconds moyens de fixation d'un même récipient, disposés à l'avant du véhicule et prévus pour recevoir un tel récipient en mode d'assistance à la marche.

De façon optionnelle également, les premiers moyens de fixation sont montés à l'arrière du cadre sous le siège et les seconds moyens de fixation sont montés à l'avant du bras sous les moyens de guidage.

De façon optionnelle également, un véhicule selon l'invention peut comporter deux roues à l'avant disposées de part et d'autre d'un plan longitudinal du véhicule, au moins un moteur d'entraînement des deux roues avant, par exemple un moteur d'entraînement pour chaque roue avant, et des moyens d'actionnement dudit au moins un moteur d'entraînement disposés sur les moyens de guidage.

De façon optionnelle également, ledit au moins un moteur est disposé entre les deux roues avant.

De façon optionnelle également, un véhicule selon l'invention peut comporter au moins une roue à l'arrière, montée sur un bras amovible, les moyens d'actionnement dudit au moins un moteur comportant des moyens de compensation de perte d'équilibre.

De façon optionnelle également, un véhicule selon l'invention peut comporter en outre des moyens de blocage d'au moins une partie des roues du véhicule et au moins un détecteur directionnel de pression ou mouvement disposé sur les moyens de guidage ou sur le bras pour :
- si le détecteur directionnel retourne une mesure comprise entre un premier seuil prédéterminé de détection d'intention de marche et un second seuil prédéterminé de détection de perte d'équilibre, actionner ledit au moins un moteur à une vitesse estimée à partir de la mesure retournée,
- sinon, activer les moyens de blocage.

De façon optionnelle également, le véhicule étant muni d'au moins trois roues, les moyens de guidage comportent au moins un détecteur directionnel de pression exercée contre eux et des moyens de contrôle d'au moins une partie des roues en fonction d'une pression détectée.

De façon optionnelle également, les moyens de guidage comportent un guidon réglable autour d'un axe transversal à la première extrémité libre du bras.

L'invention sera mieux comprise à l'aide de la description qui va suivre, donnée uniquement à titre d'exemple et faite en se référant aux dessins annexés dans lesquels :
- la figure 1 représente schématiquement et en perspective avant la structure générale d'un véhicule selon un mode de réalisation de l'invention, dans une première position d'autoporteur,
- la figure 2 représente schématiquement et en perspective avant la structure générale du véhicule de la figure 1, dans une seconde position d'assistance à la marche,
- la figure 3 est une vue de côté du véhicule de la figure 1, dans sa première position d'autoporteur et en situation d'utilisation par une personne assise ou semi-assise sur le véhicule,
- les figures 4 et 5 sont des vues de côté du véhicule de la figure 1, dans sa seconde position d'assistance à la marche et en situation d'utilisation par une personne marchant derrière le véhicule, et
- la figure 6 est une vue de côté du véhicule de la figure 1, dans une autre position optionnelle d'autoporteur instable et en situation d'utilisation par une personne debout sur le véhicule.

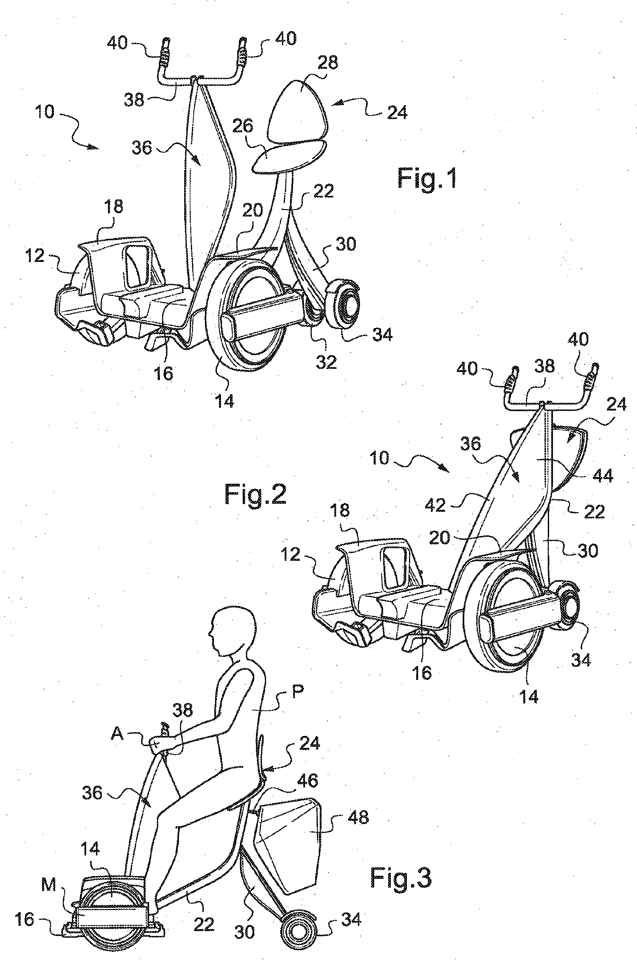

Le véhicule 10 représenté sur la figure 1 comporte deux roues 12 et 14 à l'avant, libres en rotation autour d'un axe par exemple porté par un plancher 16 destiné à rester parallèle au sol. Ce plancher 16 s'étend entre les deux roues avant et comporte même éventuellement des rebords 18 et 20 sur ses côtés droit et gauche remontant verticalement pour couvrir partiellement les deux roues avant 12, 14 et former ainsi deux garde-boue.

Le plancher 16 s'étend vers l'arrière du véhicule 10 sous la forme d'un cadre 22 de moindre largeur. Dans une première portion, le cadre 22 s'étend vers l'arrière et légèrement en hauteur, puis s'incurve vers le haut dans une seconde portion à l'extrémité libre de laquelle est monté un siège 24. Le siège 24 comporte une base 26 sur laquelle une personne est destinée à s'asseoir et optionnellement un dossier 28 contre lequel cette même personne peut reposer son dos. Dans la première position d'autoporteur illustrée sur la figure 1, la base 26 est horizontale ou légèrement descendante vers l'avant, pour s'adapter à la morphologie d'une personne en position assise ou semi-assise sur le véhicule. Le dossier 28 est quant à lui essentiellement vertical.

Au milieu du cadre 22, c'est-à-dire au voisinage de sa plus grande courbure entre les première et seconde portions, un bras arrière 30 s'étend vers l'arrière du véhicule 10 et vers le bas pour porter, à son extrémité libre, une ou deux roues arrière. Son extrémité libre peut donc prendre la forme d'une fourche pour porter une unique roue arrière, ou, comme illustré sur la figure 1, comporter un axe transversal porteur de deux roues 32 et 34. Dans le cas où le véhicule 10 comporte deux roues arrière telles qu'illustrées dans l'exemple de la figure 1, elles peuvent être de plus petite taille et plus rapprochées du plan principal longitudinal du véhicule 10 que les deux roues avant 12 et 14. Ce sont alors les roues avant qui assurent l'équilibre latéral du véhicule 10. A minima, trois roues non alignées sont nécessaires pour former un appui stable du véhicule 10 sur le sol. Dans le cas où une seule roue est prévue à l'arrière du véhicule, celle-ci peut être orientable.

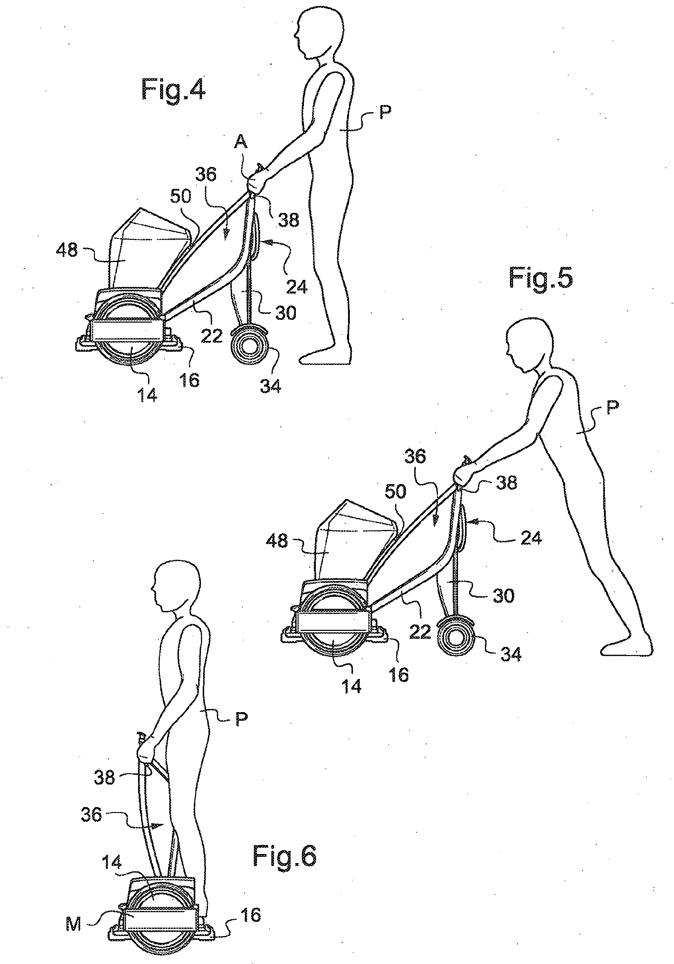

Le bras arrière 30 peut être fixé de façon rigide sur le cadre 22, mais de façon optionnelle, il peut aussi être monté de façon amovible de manière à pouvoir retirer les roues arrière 32, 34 dans une configuration instable du véhicule 10 qui sera détaillée en référence à la figure 6.

A l'avant du véhicule 10, un bras 36 est monté libre en rotation à l'une de ses extrémités autour d'un axe transversal porté par exemple par le plancher 16. A son autre extrémité, des moyens de guidage sont fixés, par exemple un guidon 38 comportant un bras tubulaire transversal. Le guidon 38 comporte en outre éventuellement deux poignées 40 disposées à angle droit aux deux extrémités de son bras tubulaire et destinées à recevoir respectivement les deux mains d'une personne utilisant le véhicule 10 pour se déplacer. Le guidon 38 avec les deux poignées 40 peut être monté réglable autour d'un axe transversal porté par son bras tubulaire pour une meilleure adaptation au choix de l'utilisateur.

Puisqu'il est monté libre en rotation à l'avant du véhicule 10, le bras 36 est déplaçable en rotation dans le plan principal longitudinal du véhicule 10 entre :
- une première position éloignée telle qu'illustrée sur la figure 1, relative au mode autoporteur, dans laquelle une première distance est prévue entre le guidon 38 et le siège 24 pour recevoir une personne en position assise ou semi-assise sur le siège, et
- une seconde position rapprochée telle qu'illustrée sur la figure 2, relative à un mode d'assistance à la marche, dans laquelle une seconde distance inférieure à la première est prévue entre le guidon 38 et le siège 24, le guidon 38 formant dans cette seconde position un moyen d'appui pour une personne marchant derrière le véhicule 10.

Les deux positions illustrées sur les figures 1 et 2 sont verrouillables pour maintenir belle qui est souhaitée sur un trajet donné. De façon connue en soi, des moyens simples et rapides de verrouillage/déverrouillage (non illustrés) de chacune des deux positions sont prévus, par exemple sur le bras 36 ou sur le guidon 38, de sorte que l'utilisateur puisse aisément passer de l'un à l'autre dés deux modes de fonctionnement précités du véhicule 10.

En pratique, la première distance doit être établie de manière à prévoir un espace suffisant entre le guidon 38 et le siège 24 pour recevoir la personne en position assise ou semi-assise. Cette distance est ainsi de préférence supérieure à 30 cm, de préférence encore supérieure à 50 cm, de préférence encore supérieure à 70 cm. Dans ce mode autoporteur, le guidon 38 se trouve généralement devant et au-dessus du siège 24.

En pratique également, la seconde distance doit être établie de sorte qu'aucun espace suffisant ne soit prévu entre le guidon 38 et le siège 24 pour recevoir la personne en position assise ou semi-assise. Cette seconde distance est de préférence très nettement inférieure à la première, par exemple inférieure à 10 cm, de préférence encore inférieure à 5 cm. Dans ce mode d'assistance à la marche, le guidon 38 se trouve généralement contre le siège 24, voire légèrement ou partiellement derrière si ce dernier peut être rabattu.

A titre d'exemple non limitatif, dans la seconde position d'assistance à la marche illustré sur la figure 2, le bras 36 repose contre le cadre 22. Plus précisément, le bras 36 est par exemple constitué d'un cadre porteur tubulaire 42 et d'un aileron 44 s'étendant sur toute la longueur du cadre porteur tubulaire 42, la forme de l'aileron 44 étant notamment choisie pour correspondre à la forme incurvée du cadre 22 portant le siège 24. Un rail peut notamment être aménagé dans le cadre 22 pour recevoir précisément l'aileron 44.

Selon ce mode de réalisation, le siège 24 est avantageusement mobile en rotation autour d'un axe transversal porté par le cadre 22 pour pouvoir être escamoté à l'arrière du véhicule 10. Ainsi, comme illustré sur la figure 2, la base 26 et le dossier 28 du siège 24 sont tous deux rabattus derrière le cadre 22 en mode d'assistance à la marche. La position des poignées 40 peut être également réglée par l'utilisateur, notamment à l'horizontalité, pour une meilleure préhension et un meilleur usage en mode d'assistance à la marche.

L'utilisation pratique du véhicule 10 est illustrée sur la figure 3 dans le mode autoporteur. Dans ce mode, le siège 24 est en position de support et le bras 36 est verrouillé dans sa première position, le guidon 38 éloigné du siège 24, pour qu'une personne P puisse se positionner sur le véhicule 10. Les pieds de la personne P reposent sur le plancher 16 tandis qu'elle est en position assise ou semi-assise sur le siège 24. La position assise se distingue de la position semi-assise par l'inclinaison des cuisses de la personne P, plus ou moins proches de l'horizontalité. Notamment, un avantage d'une conformation du véhicule 10 permettant une position semi-assise de la personne P, est que cette dernière peut ainsi se retrouver à hauteur normale d'une personne debout marchant à ses côtés, pour conjuguer une sociabilité normale et un repos en mobilité.

De façon optionnelle, des premiers moyens de fixation 46 d'un récipient 48 sont prévus à l'arrière du véhicule 10. Ils comportent par exemple une patère montée à l'arrière du cadre 22, sous le siège 24. Cette patère 46 permet d'utiliser le récipient 48 en mode autoporteur du véhicule 10.

Enfin, le déplacement du véhicule 10 est provoqué par l'actionnement d'un moteur M disposé dans l'épaisseur du plancher 16 ou de deux moteurs individuels disposés respectivement contre les deux roues avant 12 et 14. Les moyens d'actionnement (accélération, ralentissement) A de ce ou ces moteur(s) M sont par exemple déportés sur le guidon 38 et plus précisément même sur les poignées 40. Les fonctionnements précis du moteur M et des moyens d'actionnement ne font pas l'objet de la présente invention. Ils sont considérés comme classiques, les entraînements des roues avant gauche 14 et droite 12 pouvant être plus ou moins indépendants selon les applications et coûts souhaités. Par ailleurs, il convient de noter que différentes possibilités d'articulation du bras 36 peuvent être exploitées dans l'actionnement du moteur M.

L'utilisation pratique du véhicule 10 est illustrée sur la figure 4 dans le mode d'assistance à la marche. Dans ce mode, le siège 24 est en position escamotée, c'est-à-dire rabattu contre le cadre 22, et le bras 36 est verrouillé dans sa seconde position, le guidon 38 contre l'extrémité libre du cadre 22, pour que la personne P ne puisse pas se positionner sur le véhicule 10. En revanche, la personne P peut marcher derrière le véhicule 10 en se maintenant debout en équilibre grâce aux poignées 40 du guidon 38 qui est désormais accessible depuis l'arrière du véhicule 10.

De façon optionnelle, des seconds moyens de fixation 50 du récipient 48 sont prévus à l'avant du véhicule 10. Ils comportent par exemple une patère montée à l'avant du bras 36 sous le guidon 38. Cette patère 50 permet d'utiliser le récipient 48 en mode d'assistance à la marche du véhicule 10.

De façon optionnelle également, le bras arrière 30, qu'il soit fixé de façon amovible ou pas, peut être réglable pour permettre un rapprochement des roues arrière 32, 34 et des roues avant 12, 14 dans le mode d'assistance à la marche, de manière à faciliter la marche de la personne P derrière le véhicule 10. De cette façon, la distance entre les roues arrière (32, 34), d'une part, et les roues avant (12, 14), d'autre part, peut être respectivement comprise entre 50 cm et 120 cm dans la première position dite éloignée, et entre 20 cm et 50 cm dans la seconde position dite rapprochée. Ainsi, le véhicule 10 comporte des moyens pour modifier l'espacement entre les roues arrière 32, 34 et les roues avant 12, 14, ou plus généralement entre les points d'appui arrière et avant, lorsqu'il passe de l'une à l'autre des positions précitées. Dans l'exemple illustré, ces moyens de modification d'espacement des points d'appui arrière et avant sont matérialisés par le bras arrière 30 lorsqu'il est réglable.

Lorsque le véhicule 10 comporte un ou plusieurs moteurs M disposés entre les deux roues avant 12 et 14, le poids du véhicule est essentiellement concentré entre ces deux roues avant. Cela favorise la stabilité du véhicule 10 lorsqu'il est utilisé dans la seconde position rapprochée, c'est-à-dire selon le mode d'assistance à la marche. On comprend que si le ou les moteurs M étaient disposés au niveau des roues arrière 32 et 34 du véhicule 10, ce dernier aurait tendance à basculer vers l'arrière lorsqu'on s'appuie sur le guidon 38 en mode d'assistance à la marche.

Enfin, le déplacement du véhicule 10 est toujours actionné à l'aide du ou des moteurs M en accélération et décélération par la personne P à partir des poignées 40 du guidon 38.

De façon optionnelle, les poignées 40 du guidon 38 peuvent être munies de détecteurs directionnels de pression exercée contre elles, ces détecteurs étant reliés à des moyens de contrôle des roues avant 12, 14 du véhicule 10, par exempte des freins (non illustrés). Plus précisément, comme représenté sur la figure 5, dans le mode d'assistance à la marche, il peut être intéressant de détecter une perte d'équilibre involontaire de la personne P. Plus généralement, il peut être intéressant de détecter des situations dans lesquelles les roues avant 12, 14 ou arrière 32, 34 doivent être bloquées pour que le véhicule 10 constitue un référentiel fixe rééquilibrant pour la personne P. Ainsi, les moyens de contrôle peuvent être simplement conçus, en particulier programmés, pour arrêter tout déplacement du véhicule 10, lorsqu'une pression verticale du haut vers le bas (i.e. véhicule 10 utilisé en tant que support) ou qu'une variation brutale de pression (i.e. au-delà d'un certain seuil prédéterminé), quelle que soit son orientation, est détectée. Par exemple, un déséquilibre peut être mesuré au niveau du guidon 38 ou sur le bras 36, en utilisant des capteurs tels que des capteurs de pression, des accéléromètres (on considère alors qu'il y a déséquilibre lorsque le bras 36 subit une accélération au-delà d'un seuil donné, dans une ou plusieurs directions), ou des inclinomètres (on considère alors qu'il y a déséquilibre lorsque le bras 36 s'incline au-delà d'un angle donné). Lorsqu'un tel déséquilibre est détecté, le véhicule 10 peut rétablir l'équilibre de la personne P, par exemple en se bloquant.

La figure 6 illustre un mode de fonctionnement supplémentaire du véhicule 10, tout à fait optionnel. Si le ou les moteurs M est ou sont munis de moyens de compensation de perte d'équilibre et si le bras arrière 30 est amovible pour permettre le retrait des roues arrière, enfin si le cadre 22 porteur du siège 24 peut être rabattu vers l'avant contre le bras 36 porteur du guidon 38 en position orthogonale verrouillable par rapport au plancher 16, alors le véhicule 10 peut être utilisé en mode d'autoporteur instable. Dans ce mode, la personne P est debout sur le plancher 16 du véhicule 10 qui se déplace en appui instable sur le sol grâce uniquement aux deux roues avant 12 et 14. Comme cela est bien connu, lorsque la personne P s'éloigne de la verticalité, le déséquilibre que cela engendre est compensé par une accélération ou une décélération du moteur M.

Selon un mode de fonctionnement supplémentaire et optionnel, lorsque la personne P est située derrière le véhicule 10, comme cela est représenté sur les figures 4 et 5 en mode d'assistance à la marche, le véhicule 10 peut comporter des moyens pour détecter une intention de marcher de la personne P. Pour cela, on peut mettre en oeuvre des capteurs de mouvement du guidon 38 ou du bras 36 tels que décrits ci-dessus (capteur de pression, accéléromètre, inclinomètre), ces capteurs agissant sur le ou les moteurs M en fonction du mouvement du bras 36 détecté. Cela permet de réguler l'entraînement des roues en fonction de l'attitude de la personne P. Cela améliore l'assistance à la marche. Lorsque le mouvement du bras 36 dépasse un certain seuil (angle limite, pression limite, accélération limite ou variation temporelle de ces paramètres), comme précédemment décrit, les moyens de contrôle concluent à une perte d'équilibre, et bloquent alors le véhicule 10. Ainsi, selon ce mode de fonctionnement, on dispose d'un premier seuil, au-delà duquel on considère que la personne souhaite marcher, et le véhicule 10 agit en tant qu'assistance à la marche, la vitesse des roues étant régulée en fonction du mouvement exercé sur le bras 36 ou sur le guidon 38. Au-delà d'un deuxième seuil, plus élevé que le premier, les moyens de contrôle détectent une perte d'équilibre et bloquent le véhicule 10 pour rétablir l'équilibre de la personne P. Plus généralement, entre les deux seuils, une intention de marcher est détectée et on agit sur le ou les moteurs M pour un actionnement à une vitesse estimée à partir de la mesure retournée, sinon les moyens de blocage sont activés.

Il apparaît clairement qu'un véhicule tel que celui décrit précédemment permet une véritable assistance au déplacement pour une personne dont la mobilité est réduite en raison d'un handicap ou de son âge. Ce véhicule peut être utilisé aussi bien en intérieur qu'en extérieur grâce à sa reconfigurabilité selon deux modes d'utilisation courante, le mode autoporteur adapté pour des déplacements plutôt rapides en extérieur, et le mode d'assistance à la marche adapté pour des déplacements plus lents et en intérieur.

Grâce aux patères 46 et 50, ce véhicule est en particulier d'un usage très pratique pour faire des achats.

En mode d'assistance à la marche, son guidon peut être aisément muni de capteurs pour détecter des pertes d'équilibre et les compenser le cas échéant.

En mode d'assistance à la marche également, la présence d'un moteur actionnable au guidon permet de franchir plus facilement certains obstacles, alors qu'un simple déambulateur ne le permet pas. Elle permet également le transport de charges plus lourdes.

On notera par ailleurs que l'invention n'est pas limitée au mode de réalisation décrit précédemment.

En particulier, le véhicule peut n'être muni que de trois roues, ce qui constitue le minimum pour qu'il présente un appui stable sur le sol. Les deux roues hors plan longitudinal assurant l'équilibre latéral du véhicule peuvent être les roues arrière. Dans ce cas, une seule roue à l'avant peut être suffisante.

Le guidon 38 peut en outre être remplacé par un volant ou tout autre moyen de guidage équivalent.

Les plancher, bras porteurs, cadre(s) du véhicule ne sont pas non plus nécessairement organisés exactement comme sur les figures 1 à 6, de nombreuses variantes fonctionnellement similaires pouvant être imaginées.

Il apparaîtra plus généralement à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Véhicule (10) à au moins trois points (12, 14, 32, 34) d'appui stable sur le sol, dont au moins un (12, 14) à l'avant et au moins un (32, 34) à l'arrière du véhicule, comportant un bras (36) fixé à l'avant du véhicule, à une première extrémité libre duquel sont montés des moyens de guidage (38), et un siège (24) situé à l'arrière du véhicule, le bras (36) étant déplaçable relativement au siège entre :
- une première position éloignée, relative à un mode autoporteur, dans laquelle une première distance est prévue entre les moyens de guidage (38) et le siège (24) pour recevoir une personne (P) en position assise ou semi-assise sur le siège, et
- une seconde position rapprochée, relative à un mode d'assistance à la marche, dans laquelle une seconde distance inférieure à la première est prévue entre les moyens de guidage (38) et le siège (24), les moyens de guidage (38) formant dans cette seconde position un moyen d'appui pour une personne (P) marchant derrière le véhicule,
**caractérisé en ce que** le véhicule (10) comporte des moyens (30) pour modifier la distance entre les points d'appui avant (12, 14), d'une part, et arrière (32, 34), d'autre part, lorsque le bras (36) passe de l'une à l'autre desdites première position éloignée et seconde position rapprochée.

2. Véhicule (10) selon la revendication 1, dans lequel les moyens (30) pour modifier la distance entre les points d'appui avant (12, 14) et arrière (32, 34) sont conçus pour rapprocher les points d'appui avant (12, 14), d'une part, et arrière (32, 34), d'autre part, lorsque le bras (36) passe de la première position éloignée à la seconde position rapprochée.

3. Véhicule (10) selon la revendication 1 ou 2, dans lequel le siège (24) est monté sur un cadre (22), le bras (36) des moyens de guidage (38) et le cadre (22) du siège (24) présentant des formes complémentaires de sorte que le bras (36) des moyens de guidage repose contre le cadre (22) du siège dans le mode d'assistance à la marche.

4. Véhicule (10) selon la revendication 3, dans lequel le siège (24) est monté pivotant sur le cadre (22) autour d'un axe transversal, entre une première position de support en mode autoporteur dans laquelle son plan principal de support (26) est essentiellement parallèle au plan des points d'appui stable et une seconde position escamotée en mode d'assistance à la marche dans laquelle il est rabattu à l'arrière du cadre.

5. Véhicule (10) selon la revendication 3 ou 4, comportant en outre, à l'avant du véhicule, un plancher (16) d'appui des pieds d'une personne (P) en position assise ou semi-assise dans le mode autoporteur, ce plancher (16) étant solidaire du cadre (22) sur lequel est monté le siège (24), le bras (36) des moyens de guidage (38) étant fixé libre en rotation autour d'un axe transversal situé à l'avant du véhicule.

6. Véhicule (10) selon l'une quelconque des revendications 1 à 5, comportant en outre des premiers moyens (46) de fixation d'un récipient (48), disposés à l'arrière du véhicule et prévus pour recevoir un tel récipient en mode autoporteur, et des seconds moyens (50) de fixation d'un même récipient (48), disposés à l'avant du véhicule et prévus pour recevoir un tel récipient en mode d'assistance à la marche.

7. Véhicule (10) selon la revendication 6, dans lequel les premiers moyens de fixation (46) sont montés à l'arrière du cadre (22) sous le siège (24) et les seconds moyens de fixation (50) sont montés à l'avant du bras (36) sous les moyens de guidage (38).

8. Véhicule (10) selon l'une quelconque des revendications 1 à 7, comportant deux roues (12, 14) à l'avant disposées de part et d'autre d'un plan longitudinal du véhicule, au moins un moteur (M) d'entraînement des deux roues avant (12, 14), par exemple un moteur d'entraînement pour chaque roue avant, et des moyens (A) d'actionnement dudit au moins un moteur d'entraînement (M) disposés sur les moyens de guidage (38).

9. Véhicule (10) selon la revendication 8, dans lequel ledit au moins un moteur est disposé entre les deux roues avant (12, 14).

10. Véhicule (10) selon la revendication 8 ou 9, comportant au moins une roue (32, 34) à l'arrière, montée sur un bras amovible (30), les moyens d'actionnement (A) dudit au moins un moteur (M) comportant des moyens de compensation de perte d'équilibre.

11. Véhicule (10) selon l'une quelconque des revendication 8 à 10, comportant en outre des moyens de blocage d'au moins une partie des roues du véhicule (10) et au moins un détecteur directionnel de pression ou mouvement disposé sur les moyens de guidage (38) ou sur le bras (36) pour :
- si le détecteur directionnel retourne une mesure comprise entre un premier seuil prédéterminé de détection d'intention de marche et un second seuil prédéterminé de détection de perte d'équilibre, actionner ledit au moins un moteur (M) à une vitesse estimée à partir de la mesure retournée,
- sinon, activer les moyens de blocage.

12. Véhicule (10) selon l'une quelconque des revendications 1 à 11, muni d'au moins trois roues (12, 14, 32, 34), dans lequel les moyens de guidage (38) comportent au moins un détecteur directionnel de pression exercée contre eux et des moyens de contrôle d'au moins une partie des roues (12, 14, 32, 34) en fonction d'une pression détectée.

13. Véhicule (10) selon l'une quelconque des revendications 1 à 12, dans lequel les moyens de guidage (38) comportent un guidon réglable autour d'un axe transversal à la première extrémité libre du bras (36).

## Patentansprüche

1. Fahrzeug (10) mit zumindest drei stabilen Lagerpunkten (12, 14, 32, 34) auf dem Boden, davon zumindest einer (12, 14) vorne und zumindest einer (32, 34) hinten am Fahrzeug, einen Arm (36) umfassend, der vorne am Fahrzeug befestigt ist, an dessen erstem freien Ende Führungsmittel (38) montiert sind, sowie einen Sitz (24) hinten am Fahrzeug, wobei der Arm (36) im Verhältnis zum Sitz bewegt werden kann, zwischen:
- einer ersten entfernten Stellung, einem selbsttragenden Modus entsprechend, in der ein erster Abstand zwischen den Führungsmitteln (38) und dem Sitz (24) vorgesehen ist, um eine Person (P) auf dem Sitz in einer sitzenden oder halb sitzenden Stellung aufzunehmen, und
- einer zweiten angenäherten Stellung, einem Gehhilfemodus entsprechend, in der ein zweiter Abstand zwischen den Führungsmitteln (38) und dem Sitz (24) vorgesehen ist, der kleiner ist, als der erste, wobei die Führungsmittel (38) in dieser zweiten Stellung ein Stützmittel für eine Person (P) bilden, die hinter dem Fahrzeug einhergeht,
**dadurch gekennzeichnet, dass** das Fahrzeug (10) Mittel (30) zum Ändern des Abstands zwischen den vorderen Lagerpunkten (12, 14) einerseits, und den hinteren Lagerpunkten (32, 34) andererseits umfasst, wenn der Arm (36) von der einen in die andere der besagten ersten entfernten Stellung und zweiten angenäherten Stellung übergeht.

2. Fahrzeug (10) nach Anspruch 1, wobei die Mittel (30) zum Ändern des Abstands zwischen den vorderen (12, 14) und den hinteren (32, 34) Lagerpunkten derart gestaltet sind, um die vorderen Lagerpunkte (12, 14) einerseits und die hinteren Lagerpunkte (32, 34) andererseits anzunähern, wenn der Arm (36) von der ersten entfernten Stellung in die zweite angenäherte Stellung übergeht.

3. Fahrzeug (10) nach Anspruch 1 oder 2, wobei der Sitz (24) auf einem Rahmen (22) montiert ist, wobei der Arm (36) der Führungsmittel (38) und der Rahmen (22) des Sitzes (24) einander ergänzende Formen aufweisen, sodass der Arm (36) der Führungsmittel im Gehhilfemodus am Rahmen (22) des Sitzes anliegt.

4. Fahrzeug (10) nach Anspruch 3, wobei der Sitz (24) um eine Querachse zwischen einer ersten Haltestellung im selbsttragenden Modus schwenkbar auf dem Rahmen (22) montiert ist, in der seine Haupttrageebene (26) im Wesentlichen parallel zur Ebene der stabilen Lagerpunkte liegt, und einer zweiten eingezogenen Stellung im Gehhilfemodus, in der er hinten am Rahmen eingeklappt ist.

5. Fahrzeug (10) nach Anspruch 3 oder 4, das darüber hinaus vorne am Fahrzeug einen Boden (16) zum Auflegen der Füße einer Person (P) in der sitzenden oder halbsitzenden Stellung im selbsttragenden Modus umfasst, wobei dieser Boden (16) fest mit dem Rahmen (22) verbunden ist, auf dem der Sitz (24) montiert ist, wobei der Arm (36) der Führungsmittel (38) frei um eine Querachse drehend befestigt ist, die sich vorne am Fahrzeug befindet.

6. Fahrzeug (10) nach irgendeinem der Ansprüche 1 bis 5, das darüber hinaus erste Mittel (46) zum Befestigen eine Behälters (48) umfasst, die hinten am Fahrzeug angeordnet und dafür vorgesehen sind, einen solchen Behälter im selbsttragenden Modus aufzunehmen, und zweite Mittel (50) zum Befestigen eines selben Behälters (48), die vorne am Fahrzeug angeordnet und dafür vorgesehen sind, einen solchen Behälter im Gehhilfemodus aufzunehmen.

7. Fahrzeug (10) nach Anspruch 6, wobei die ersten Befestigungsmittel (46) hinten am Rahmen (22) unter dem Sitz (24) montiert sind, und die zweiten Befestigungsmittel (50) vorne am Arm (36) unter den Führungsmitteln (38) montiert sind.

8. Fahrzeug (10) nach irgendeinem der Ansprüche 1 bis 7, zwei Räder (12, 14) vorne umfassend, die beiderseits einer Längsebene des Fahrzeugs angeordnet sind, zumindest einen Motor (M) für den Antrieb der beiden Räder (12, 14) vorne, beispielsweise einen Antriebsmotor für jedes Vorderrad, und Mittel (A) zum Betätigen des besagten zumindest einen Antriebsmotors (M), die auf den Führungsmitteln (38) angeordnet sind.

9. Fahrzeug (10) nach Anspruch 8, wobei der besagte zumindest eine Motor zwischen den beiden Vorderrädern (12, 14) angeordnet ist.

10. Fahrzeug (10) nach Anspruch 8 oder 9, zumindest ein Rad (32, 34) hinten umfassend, das auf einem umsetzbaren Arm (30) montiert ist, wobei die Mittel (A) zum Betätigen des besagten zumindest einen Motors (M) Mittel zum Ausgleichen des Gleichgewichtsverlustes umfassen.

11. Fahrzeug (10) nach irgendeinem der Ansprüche 8 bis 10, das darüber hinaus Mittel zum Blockieren zumindest eines Teils der Räder des Fahrzeugs (10) und zumindest einen Richtungsdetektor für Druck oder Bewegung umfasst, der auf den Führungsmitteln (38) oder auf dem Arm (36) angeordnet ist, um:
- wenn der Richtungsdetektor einen Messwert zwischen einem ersten vorbestimmten Grenzwert für die Erkennung einer Gehabsicht und einem zweiten vorbestimmten Grenzwert für die Erkennung eines Gleichgewichtsverlusts zurückschickt, den besagten zumindest einen Motor (M) mit einer Geschwindigkeit anzusteuern, die ausgehend vom zurückgeschickten Messwert eingeschätzt wird,
- ansonsten die Mittel zum Blockieren zu aktivieren.

12. Fahrzeug (10) nach irgendeinem der Ansprüche 1 bis 11, das mit zumindest drei Rädern (12, 14, 32, 34) versehen ist, in dem die Führungsmittel (38) zumindest einen Richtungsdetektor für den Druck umfassen, der auf diese ausgeübt wird, sowie Mittel zur Kontrolle zumindest eines Teils der Räder (12, 14, 32, 34) in Abhängigkeit von einem erkannten Druck.

13. Fahrzeug (10) nach irgendeinem der Ansprüche 1 bis 12, wobei die Führungsmittel (38) einen Lenker umfassen, der um eine Achse eingestellt werden kann, die quer zum ersten freien Ende des Arms (36) verläuft.

## Claims

1. Vehicle (10) with at least three stable bearing points (12, 14, 32, 34) on the ground, of which at least one (12, 14) at the front and at least one (32, 34) at the rear of the vehicle, comprising an arm (36) fixed to the front of the vehicle, at a free first end of which arm are mounted steering means (38), and a seat (24) situated at the rear of the vehicle, the arm (36) being movable relative to the seat between:
- a first remote position, relating to a self-support mode, wherein a first distance is provided between the steering means (38) and the seat (24) in order to receive a person (P) in seated or semi-seated position on the seat, and
- a second closer position, relating to a walking assistance mode, wherein a second distance shorter than the first is provided between the steering means (38) and the seat (24), with the steering means (38) forming in this second position a support means for a person (P) walking behind the vehicle,
**characterized in that** the vehicle (10) comprises means (30) for modifying the distance between the front (12, 14), on the one hand, and rear (32, 34), on the other hand, bearing points, when the arm (36) passes from one to the other of said first remote position and second closer position.

2. Vehicle (10) according to claim 1, wherein the means (30) for modifying the distance between the front (12, 14) and rear (32, 34) bearing points are designed to bring closer the front (12, 14), on the one hand, and rear (32, 34), on the other hand, bearing points, when the arm (36) passes from the first remote position to the second closer position.

3. Vehicle (10) according to claim 1 or 2, wherein the seat (24) is mounted on a frame (22), with the arm (36) of the steering means (38) and the frame (22) of the seat (24) presenting complementary shapes in such a way that the arm (36) of the steering means rests against the frame (22) of the seat in the walking assistance mode.

4. Vehicle (10) according to claim 3, wherein the seat (24) is mounted pivotingly on the frame (22) around a transverse axis, between a first support position in self-support mode wherein its main plane of support (26) is substantially parallel to the plane of the stable bearing points and a second retracted position in walking assistance mode wherein it is folded back at the rear of the frame.

5. Vehicle (10) according to claim 3 or 4, further comprising, at the front of the vehicle, a floor (16) for supporting the feet of a person (P) in seated or semi-seated position in the self-support mode, with this floor (16) being integral with the frame (22) whereon is mounted the seat (24), the arm (36) of the steering means (38) being fixed freely to rotate around a transverse axis situated at the front of the vehicle.

6. Vehicle (10) according to any of claims 1 to 5, further comprising first means (46) for fixing a container (48), arranged at the rear of the vehicle and provided for receiving such a container in self-support mode, and second means (50) for fixing the same container (48), arranged at the front of the vehicle and provided for receiving such a container in walking assistance mode.

7. Vehicle (10) according to claim 6, wherein the first means of fixing (46) are mounted at the rear of the frame (22) under the seat (24) and the second means of fixing (50) are mounted at the front of the arm (36) under the steering means (38).

8. Vehicle (10) according to any of claims 1 to 7, comprising two wheels (12, 14) at the front arranged on either side of a longitudinal plane of the vehicle, at least one motor (M) for driving the two front wheels (12, 14), for example one drive motor for each front wheel, and means (A) for actuating said at least one drive motor (M) arranged on the steering means (38).

9. Vehicle (10) according to claim 8, wherein said at least one motor is arranged between the two front wheels (12, 14).

10. Vehicle (10) according to claim 8 or 9, comprising at least one wheel (32, 34) at the rear, mounted on a movable arm (30), the means for actuating (A) said at least one motor (M) comprising means for offsetting a loss of balance.

11. Vehicle (10) according to any one of claim 8 to 10, further comprising means for blocking at least one portion of the wheels of the vehicle (10) and at least one directional detector of pressure or movement arranged on the steering means (38) or on the arm (36) in order to:
- if the directional detector returns a measurement between a first predetermined threshold for detecting the intention to walk and a second predetermined threshold for detecting a loss of balance, actuate said at least one motor (M) at a speed estimated using the measurement returned,
- otherwise, activate the means for blocking.

12. Vehicle (10) according to any of claims 1 to 11, provided with at least three wheels (12, 14, 32, 34), wherein the steering means (38) comprise at least one directional detector of pressure exerted against them and means for controlling at least one portion of the wheels (12, 14, 32, 34) according to a pressure detected.

13. Vehicle (10) according to any of claims 1 to 12, wherein the steering means (38) comprise a handlebar that can be adjusted around a transverse axis at the first free end of the arm (36).
